Europäisches Patentamt

European Patent Office

Office européen des brevets

(19)

(11) **EP 1 684 531 A2**

(12) **EUROPEAN PATENT APPLICATION**

(43) Date of publication:
26.07.2006 Bulletin 2006/30

(51) Int Cl.:
*H04N 13/00* (2006.01)

(21) Application number: 06001103.8

(22) Date of filing: 19.01.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 19.01.2005 JP 2005011791

(71) Applicant: HITACHI, LTD.
Chiyoda-ku
Tokyo 100-8280 (JP)

(72) Inventors:
• Yokota, Soichiro
Hitachi Ltd., Intel. Prop. Group,
Chiyoda-ku, Tokyo 100-8220 (JP)
• Muramatsu, Shoji
Hitachi Ltd., Intel. Prop. Group,
Chiyoda-ku, Tokyo 100-8220 (JP)
• Osaka, Ichiro
Hitachi Ltd., Intel. Prop. Group,
Chiyoda-ku, Tokyo 100-8220 (JP)

(74) Representative: Beetz & Partner
Patentanwälte,
Steinsdorfstrasse 10
80538 München (DE)

(54) **Vehicle mounted stereo camera apparatus**

(57) A vehicle mounted stereo camera apparatus including a plurality of imaging units (601 and 602) for generating image data sequentially based on optical information from an object, and an image processing unit (603) for importing the image data generated by the plurality of imaging units respectively, processing the imported image data individually, and then performing a stereo image process operation (616). The image data (A and B) input into the image processing unit (603) are synchronized with clock signals (608 and 609) for importing and processing the image data respectively. Thus, the stereo image process operation (616) is performed without horizontal pixel misalignment between image data A and B from the plurality of imaging units (601 and 602), so as to attain a stereo matching process with a high accuracy.

FIG. 1A

## Description

BACKGROUND OF THE INVENTION

The present invention relates to a stereo camera apparatus and a stereo image process technique, and particularly relates to a stereo camera apparatus in which imaging timing and image input timing are adjusted in a stereo image process.

A stereo camera apparatus in which a distance to an object is calculated using a pair of images taken by two imaging units, and the object is recognized based on the calculated distance has begun to be applied to a supervisory system for detecting entry of a suspicious person or abnormality or a vehicle mounted system for assisting a driver to drive safely.

The stereo image process used in the supervisory system or the vehicle mounted system is to apply a triangular surveying technique to a pair of images taken at a positional interval so as to obtain a distance. The stereo image processing apparatus typically has a pair of imaging units and a stereo image processing LSI for applying a triangular surveying process to a pair of images output by the imaging units. The stereo image processing LSI performs a process to superimpose pixel information included in the pair of images so as to obtain a position where the two images coincide with each other. Thus, the stereo image processing LSI achieves the triangular surveying process. It will be ideal if there is no misalignment but a parallax between the pair of images. It is therefore necessary to adjust each imaging unit to eliminate any variation in optical properties or signal properties.

Particularly in a vehicle mounted environment, there is an application demand to detect, for example, a vehicle, a human being, an obstacle, etc. in front and to deal therewith safely in advance. It is therefore necessary to make sure to measure a distance to a far object and recognize the object.

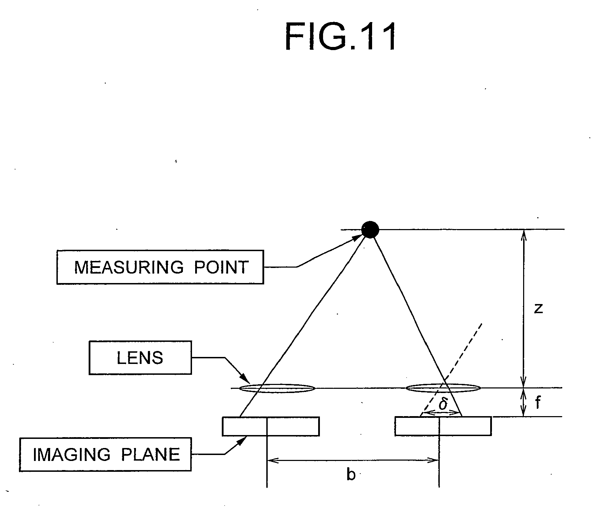

Generally in the stereo camera apparatus, the aforementioned request to have no misalignment but a parallax becomes stronger with increase of the distance to the object. Fig. 11 is a diagram showing a typical configuration of the stereo camera apparatus and functions thereof. In Fig. 11, $\delta$, Z, $\underline{f}$ and $\underline{b}$ designate a parallax, a measured distance, a focal length and a base length respectively. A relation as shown in the following expression is established among these.

$$Z = bf/\delta \qquad \ldots (1)$$

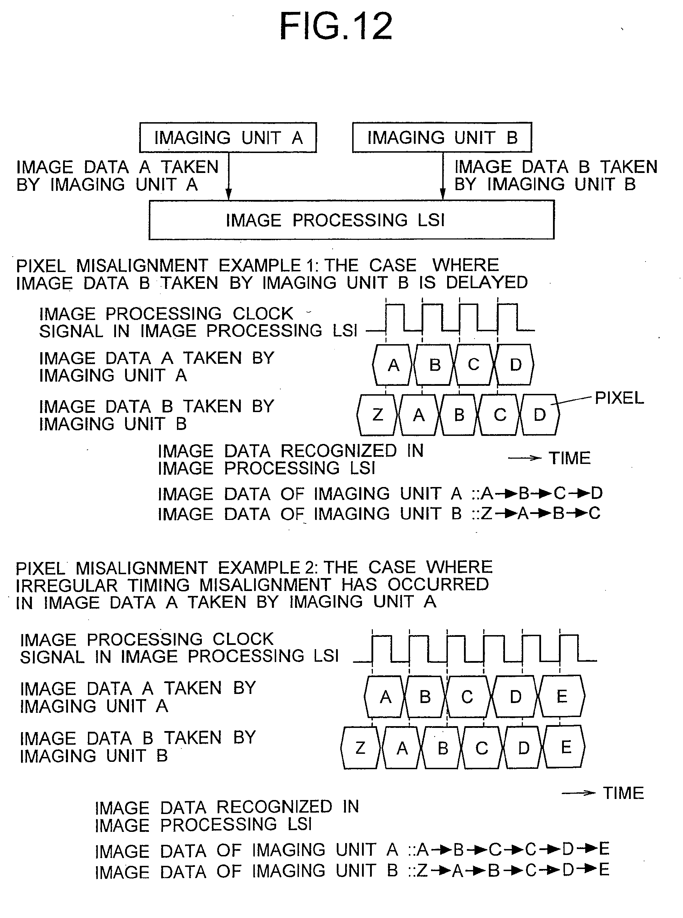

By use of the expression (1) and on the assumption that it is, for example, aimed at use in a vehicle mounted environment and a distance to be measured is 100 m (Z=100 m: to measure a distance to an object which is 100 m ahead), there occurs a lag between the timings at which data of taken images are propagated to the image processing LSI respectively. As a result, there occurs a horizontal one-pixel misalignment between the two images as shown in Fig. 12. Deterioration of distance measuring accuracy caused by the horizontal one-pixel misalignment will be described briefly. Here, Fig. 12 is an explanatory view showing the case where there has occurred a pixel misalignment between data of images taken by a stereo camera apparatus.

First, based on the conditions to arrange a typical stereo camera apparatus, assume that parameter values to be assigned to the expression (1) except the value Z are set as f=10 mm and b=350 mm, and imaging devices to be used are 1/4-inch 380-thousand-pixel CCD (Charge Coupled Device) image sensors. Assign these parameter values to the expression (1). Then, deterioration of about 20 m can occur in the distance measuring accuracy if there occurs a horizontal one-pixel misalignment as shown in Fig. 12 when the distance to an object 100m ahead is measured.

This distance measuring result is out of an allowable range of the required accuracy in measuring the distance of 100 m. It is therefore necessary to make a design not to produce a lag (horizontal pixel misalignment) between possible timings to propagate data of taken images to the image processing LSI respectively when the stereo camera apparatus is used with the aforementioned parameter values. Further, when the stereo image processing system is used in a vehicle mounted system, it is also requested to make the stereo image processing system smaller in size, lower in price and higher in reliability.

Also as for the timing to take each image, it is necessary to be careful not to produce any misalignment in a vehicle mounted environment because the image is taken when the vehicle is moving.

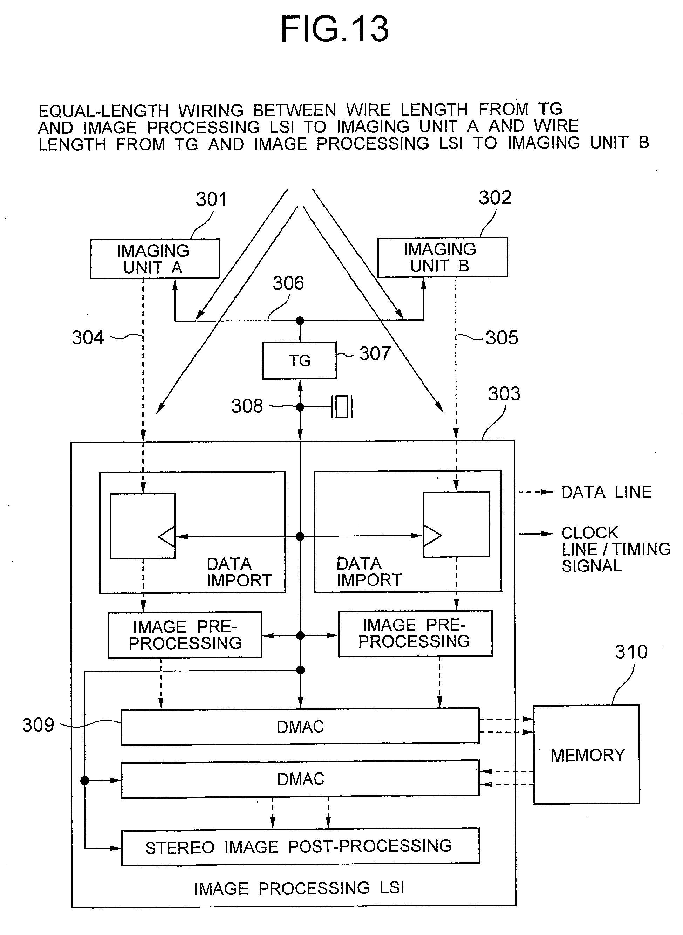

Measures against the aforementioned misalignment have been taken in the background art as follows. First, misalignment (horizontal pixel misalignment) as to possible timing at which data of each taken image is propagated to the image processing LSI is generally dealt with by a so-called equal-length wiring technique. In the equal-length wiring technique, the lengths of signal lines between respective imaging units 301 and 302 and an image processing LSI 303 for processing images output by the imaging units 301 and 302 are made equal to each other, as shown in a configuration example of Fig. 13. Here, Fig. 13 is a diagram showing a configuration based on equal-length wiring between each imaging unit and the image processing LSI in the stereo camera apparatus.

In the configuration example of Fig. 13, the imaging timings of the imaging unit A 301 and the imaging unit B 302 are decided by a common imaging instruction signal 306 generated by an external TG (Timing Generator) 307. Data of images taken by the respective imaging units 301 and 302 are imported in the image processing LSI in accordance with one and the same clock signal 308. The imported image data are once transferred to a memory 310 by a DMAC (Direct Memory Access Controller) 309. After that, both the image data are read from the memory 310 at desired timing, and a stereo image process is applied to the image data.

In this event, the wire length of a signal (imaging control signal 306) between the imaging unit A 301 and the timing generator 307 is made equal to the wire length of the signal (imaging control signal 306) between the imaging unit B 302 and the timing generator 307. Thus, misalignment is prevented from occurring in the imaging timing at which each imaging unit takes an image and the timing at which each imaging unit transfers the taken image. In addition, the wire length of a signal (image data signal 304) between the imaging unit A 301 and the image processing LSI 303 is made equal to the wire length of a signal (image data signal 305) between the imaging unit B 302 and the image processing LSI 303. Thus, horizontal pixel misalignment is prevented from occurring.

However, in the method shown in Fig. 13, it is likely that there may occur a misalignment between the data signal line 304 of the imaging unit A and the data signal line 305 of the imaging unit B due to noise or waveform rounding appearing in the signals on the signal lines. Particularly in a vehicle mounted environment, there is a large difference in temperature between a high temperature and a low temperature, and a change in signal properties caused by the temperature difference is expected. Therefore, in the method based on equal-length wiring, there is a problem in reliability as to whether a stereo matching process can be always attained with high accuracy or not.

In addition thereto, it is expected that the image size will increase with improvement of throughput. When the sampling rate of image data to be transferred is increased thus, noise or temperature will have a greater influence in the method based on equal-length wiring. When such a situation is taken into consideration, probable occurrence of pixel misalignment as shown in Fig. 12 cannot be solved in the method based on equal-length wiring. Thus, the method based on equal-length wiring is not sufficient as a fundamental solution to the problem of horizontal pixel misalignment. It is therefore difficult to attain required accuracy in a vehicle mounted environment by means of equal-length wiring.

Further, in the method based on equal-length wiring, the way of setting a board configuration is restricted. Whenever a new board is designed or whenever an imaging unit to be used is changed, the aforementioned influence of noise or temperature has to be reviewed. Thus, there is also a problem in attaining a system smaller in size and lower in price.

A solution to the aforementioned problems in equal-length wiring has been proposed, for example, as disclosed in JP-A-6-70216 or JP-A-8-331548. JP-A-6-70216 proposes a method in which it is not necessary to adjust any circuit even if the cable length between each imaging unit and an image processing unit is changed when a new board is developed or the imaging unit is changed. According to this method, a mechanism for detecting the cable length and a mechanism for correcting a propagation delay time error caused by the cable length are provided in the image processing unit to be able to perform signal processing while correcting the propagation delay time error.

On the other hand, JP-A-8-331548 proposes a method in which a phase difference between a sync signal and a video signal is eliminated even when the cable length is long. According to this method, in a television camera control system constituted by a television camera and a control apparatus, a delay may occur between a sync signal and a video signal due to a long cable length between the television camera and the control apparatus. In such a case, a command to set the phase of the sync signal forward by a predetermined amount in accordance with the cable length is sent from the control apparatus to the television camera. Thus, the phase difference caused by the delay is canceled. In this event, the proposed television camera control system is designed as follows. That is, the television camera performs an imaging process and outputs a video signal to the control apparatus by use of a sync signal generated by the control apparatus. The control apparatus processes the input video signal in sync with the sync signal.

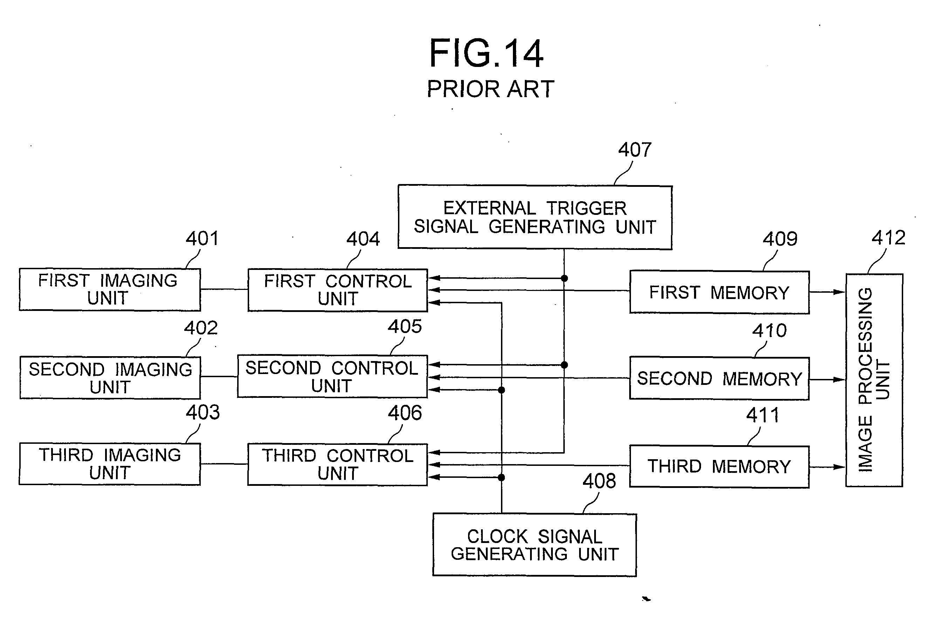

Next, a solution to misalignment as to the timing at which each image is taken has been proposed, for example, as disclosed in JP-A-2002-165108. A configuration example of JP-A-2002-165108 is shown in Fig. 14. JP-A-2002-165108 discloses an image acquisition apparatus including a plurality of imaging units 401-403, wherein a common external trigger signal generating unit 407 and a common clock signal generating unit 408 are provided for the plurality of imaging units 401-403 so as to obtain image data signals synchronized with one another. In the configuration shown in Fig. 14, control units 404-406 are provided for the plurality of imaging units 401-403 respectively, and in the stages following the control units 404-406, external memories 409-411 are provided for the plurality of imaging units respectively. Thus, image inputs to an image processing unit 412 in the final stage can be synchronized with one another.

SUMMARY OF THE INVENTION

Of the background-art techniques concerning misregistration as to the timing at which data of taken images are propagated to an image processing LSI, the technique disclosed in JP-A-6-70216 can absorb the propagation delay characteristic caused by the cable length or cables themselves when a new board is designed. However, a correction process is executed after phase comparison. It is therefore impossible to absorb the influence caused by noise or a temperature difference in real time after each unit has been mounted on the board. In addition, it cannot be denied that it is likely that pixel misalignment as shown in Fig. 12 occurs among data of images output by a plurality of imaging units.

Also in JP-A-8-331548, it is possible to eliminate the phase difference between a sync signal used in one imaging unit and a video signal output by the imaging unit. However, when a plurality of such imaging units are provided, it cannot be guaranteed that no pixel alignment as shown in Fig. 12 occurs among data of images respectively output from the imaging units.

On the other hand, according to JP-A-2002-165108 proposing a solution to misalignment as to timing to take images, the external trigger signal generating unit 407 and the clock signal generating unit 408 are disposed so closely to the respective imaging units 401-403 that the imaging timings of the imaging units 401-403 can be synchronized. In the same manner, the memories 409-411 are disposed so closely to the imaging units respectively that it is also possible to deal with misalignment (horizontal pixel misalignment) as to timing to propagate data of taken images to the image processing LSI. However, even according to this method, it is difficult to design a board so as to dispose the external trigger signal generating unit 407 or the clock signal generating unit 408, for example, closely to both the first imaging unit 401 and the second imaging unit 402 when there is a long distance between the two imaging units.

As a result, there also arises an occasion when the wire length between the first imaging unit 401 and the external trigger signal generating unit 407 and the wire length between the first imaging unit 401 and the clock signal generating unit 408 must be careful to be equal to the wire length between the second imaging unit 402 and the external trigger signal generating unit 407 and the wire length between the second imaging unit 402 and the clock signal generating unit 408 respectively. It is therefore impossible to solve the aforementioned problem as to the imaging timing with accuracy required in a vehicle mounted environment. In addition, due to the restriction placed on dispositions in a board, the degree of freedom in design is spoiled. Further, also as to horizontal pixel misalignment, memories have to be placed for the imaging units individually. It is therefore difficult to attain the requirements while making the system smaller in size and lower in price.

An object of the present invention is to provide a vehicle mounted stereo camera apparatus which can solve the foregoing problems belonging to the

background art.

Another object of the present invention is to provide a vehicle mounted stereo camera apparatus in which a stereo image process can be performed by an image processing LSI using image data output by one imaging unit and image data output by another imaging unit so as to prevent occurrence of pixel misalignment between the image data.

A further object of the present invention is to provide a vehicle mounted stereo camera apparatus which can be made small in size as a whole, low in price and high in reliability without any misalignment even among the imaging timings of a plurality of imaging units.

In order to attain the foregoing objects, the present invention is chiefly configured as follows.

A vehicle mounted stereo camera apparatus including a plurality of imaging units for generating image data sequentially based on optical information from an object, and an image processing unit for importing the image data generated by the plurality of imaging units respectively, processing the imported image data individually, and then performing a stereo image process operation is designed as:

the image data input into the image processing unit are synchronized with clock signals for importing and processing the image data respectively, so as to perform the stereo image process operation while eliminating horizontal pixel misalignment from the image data from the plurality of imaging units.

In addition, in the vehicle mounted stereo camera apparatus, analog-to-digital conversion units for converting analog data into digital data are provided for the imaging units and between the imaging units and the image processing unit respectively; and clock signals for analog-to-digital conversion used in the analog-to-digital conversion units are used as clock signals for importing and processing image data from the imaging units in the image processing unit.

Further, a vehicle mounted stereo camera apparatus including a plurality of imaging units for generating image data sequentially based on optical information from an object, and an image processing unit for importing the image data generated by the plurality of imaging units respectively, processing the imported image data individually, and then performing a stereo image process operation is designed as:

the image processing unit includes an imaging timing misalignment detection unit for detecting misalignment as to imaging timing among the imaging units; and

the misalignment as to imaging timing is adjusted by the misalignment detection unit and timing signals with which the imaging units are to take images are output to the imaging units respectively through a timing generator.

According to the present invention, a lag of timing (horizontal pixel misalignment) which may be generated when data of a plurality of taken images are propagated to the image processing LSI can be eliminated so that a stereo camera apparatus high in reliability and high in accuracy can be obtained.

In addition, it is not necessary to take it into consideration to set equal-length wiring as to lines between the respective imaging units and the image processing LSI. Accordingly, the system can be constructed with a minimum configuration, and the apparatus can be made small in size and low in price.

Other objects, features and advantages of the invention will become apparent from the following description of the embodiments of the invention taken in conjunction with the accompanying drawings.

BRIEF DESCRIPTION OF THE DRAWINGS

Fig. 1A is a block diagram showing an example of a configuration of a vehicle mounted stereo camera apparatus according to a first embodiment of the present invention;

Fig. 1B is a timing chart showing a signal waveform in each unit of the vehicle mounted stereo camera apparatus shown in Fig. 1A;

Fig. 2 is a chart showing an operation flow of a stereo image process in the vehicle mounted stereo camera apparatus according to the first embodiment;

Fig. 3 is a block diagram showing a configuration of a vehicle mounted stereo camera apparatus according to a second embodiment of the present invention;

Fig. 4 is a diagram showing a specific configuration of an imaging timing misalignment detection mechanism in the vehicle mounted stereo camera apparatus according to the second embodiment of the present invention;

Fig. 5 is a chart showing operation timing at a normal time when there is no imaging timing misalignment in the imaging timing misalignment detection mechanism according to the second embodiment;

Fig. 6 is a chart showing operation timing when imaging timing misalignment corresponding to half a clock period has been detected in the imaging timing misalignment detection mechanism according to the second embodiment;

Fig. 7 is a chart showing operation timing when imaging timing misalignment corresponding to one clock period has been detected in the imaging timing misalignment detection mechanism according to the second embodiment;

Figs. 8A-8B are block diagrams showing configurations of vehicle mounted stereo camera apparatus according to a third embodiment of the present invention;

Fig. 9 is a diagram showing a configuration example using different kinds of imaging units in a vehicle mounted stereo camera apparatus according to the third embodiment;

Fig. 10 is a chart showing a configuration to change over an operation timing signal in a vehicle mounted stereo camera apparatus according to a fourth embodiment of the present invention;

Fig. 11 is a diagram showing a typical configuration of a stereo camera apparatus and functions thereof;

Fig. 12 is an explanatory view showing the case where there has occurred a pixel misalignment between data of images taken by a stereo camera apparatus;

Fig. 13 is a diagram showing a configuration based on equal-length wiring between each imaging unit and an image processing LSI in the stereo camera apparatus; and

Fig. 14 is a system configuration diagram between imaging units and an image processing unit in a stereo camera apparatus according to the background art.

DETAILED DESCRIPTION OF THE EMBODIMENTS

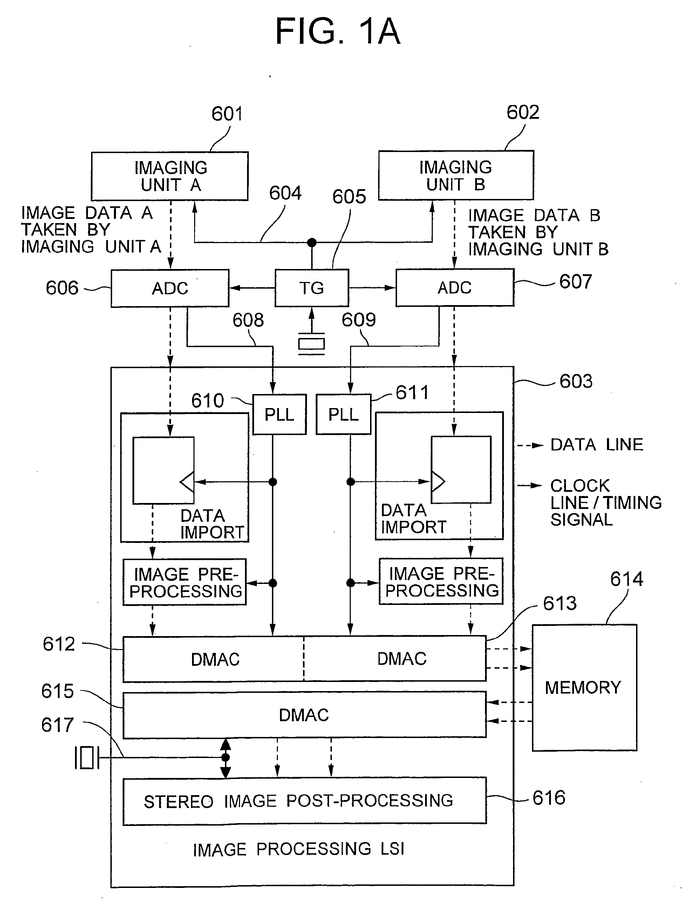

Vehicle mounted stereo camera apparatus according to embodiments of the present invention will be described below in detail with reference to Figs. 1A to 10.

(First Embodiment)

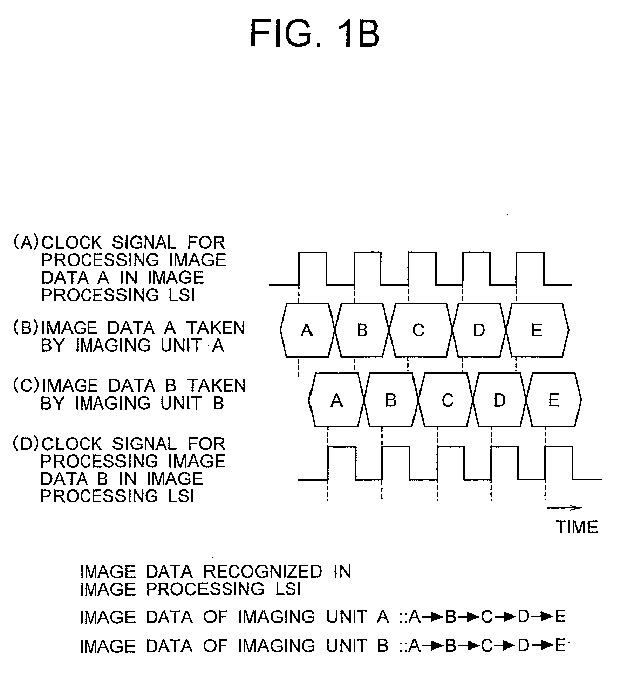

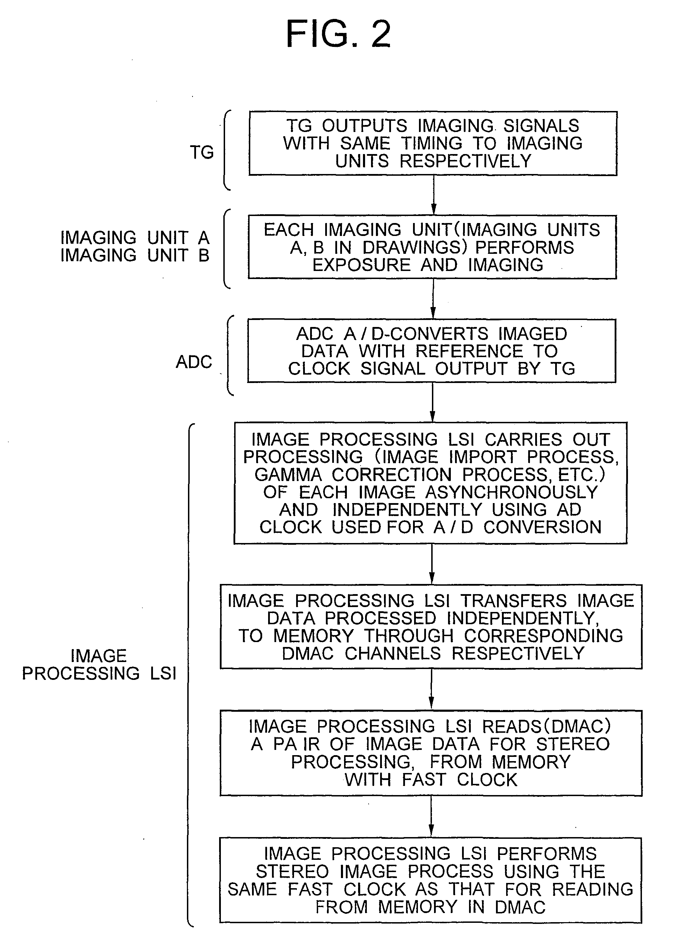

A vehicle mounted stereo camera apparatus according to a first embodiment of the present invention will be described below with reference to Figs. 1A-1B and 2. Fig. 1A is a block diagram showing a configuration of the vehicle mounted stereo camera apparatus according to the first embodiment of the present invention. Fig. 1B is a timing chart showing a signal waveform in each unit of the vehicle mounted stereo camera apparatus shown in Fig. 1A. Fig. 2 is a chart showing an operation flow of a stereo image process in the vehicle mounted stereo camera apparatus according to the first embodiment.

In Fig. 1A, the stereo camera apparatus has a plurality of imaging units including an imaging unit A 601 and an imaging unit B 602, and one image processing LSI 603. Each imaging unit 601, 602 is connected to the image processing LSI 603 through a timing generator (TG) 605 for outputting an imaging timing signal 604 and an analog-to-digital (AD) converter (ADC) 606, 607.

The imaging unit A 601 and the imaging unit B 602 are typically constituted by CCD (Charge Coupled Device) sensors. Each of the imaging unit A 601 and the imaging unit B 602 converts external light, that is, optical information from an object into electric charge information, and supplies one screen of image data sequentially to the image processing LSI 603 through the ADC 606, 607 for generating digital image data. In this event, the imaging unit A 601 and the imaging unit B 602 receive an imaging timing signal 604 for imaging, from the timing generator (TG) 605, and perform an imaging process in sync with the imaging timing signal 604.

Each ADC 606, 607 receives a clock reference signal for AD conversion, from the timing generator TG 605, and performs analog-to-digital conversion upon the imaged data. In that event, the ADC 606, 607 supplies the image processing LSI 603 with an analog-digital clock signal (hereinafter referred to as "AD clock signal") 608, 609 used for converting the imaged data into digital data. The AD clock signal 608, 609 is generally named ADCLK, ADCK etc.

The image processing LSI 603 receives the AD clock signal 608, 609 from the ADC 606, 607 connected to the imaging unit 601, 602. The image processing LSI 603 adjusts the phase of the clock by means of a PLL 610, 611 provided in the image processing LSI 603, and samples the imaged data output from the ADC 606, 607.

Here, in the ADC 606, 607 which is a processing stage just before the image processing LSI 603, each AD clock signal 608, 609 is output in sync with image data A, B output by each imaging unit 601, 602. Accordingly, the image processing LSI 603 can import the image data into the memory 614 surely without any pixel misalignment.

More specifically, the image data A output from the ADC 606 are subjected to an A/D conversion process based on the AD clock signal 608. Therefore, the image data A are synchronized with the AD clock signal 608. On the other hand, the image data B output from the ADC 607 is synchronized with the AD clock signal 609. Accordingly, data import, image preprocessing and direct memory access controller (DMAC) operation of the image data A and the image data B are executed in accordance with the AD clock signal 608 and the AD clock signal 609 respectively. Thus, the image data A and the image data B are once stored in the memory 614 in the state where there is no pixel misalignment between the image data A and the image data B. In such a manner, no pixel misalignment as shown in Fig. 2 occurs between the image data A and the image data B when stereo image post-processing 616 is performed thereon. In this case, no pixel misalignment will occur even if the AD clock signal 608 and the AD clock signal 609 are asynchronous. This embodiment is characterized by aligning the relationship between image data and an image data processing clock in such a manner.

Fig. 1B shows the aforementioned features of this embodiment. As shown in Fig. 1B, even if the phases of the image data A and B are shifted from each other, the image data A and B can be stored in the memory when clock signals used for processing the image data respectively are synchronized with the image data respectively. That is, there is no fear that there occurs a pixel misalignment in image data which will be subjected_ to a stereo image process.

The image processing LSI 603 processes each image data individually and in sync with a PLL output clock signal based on the AD clock signal 608, 609, and accumulates the processed image data in the memory 614 through a DMAC 612, 613. Image preprocessing in the stage followed by the DMAC 612, 613 shown in Fig. 1A includes a gamma correction process etc.

After that, a pair of image data accumulated in the memory 614 are read through a DMAC 615, and a stereo image process is performed thereon. In this event, a fast clock signal 617 is used for the DMAC 615 and a stereo image process 616 so that the processing time taken for the stereo image process can be shortened.

Fig. 2 summarizes a flow of a series of operations in the stereo image process attained in the configuration of this embodiment. First, the timing generator TG 605 outputs the imaging timing signals 604 to the imaging units 601 and 602 respectively at one and the same timing. The imaging units 601 and 602 perform exposure and imaging based on the imaging timing signals respectively. The ADCs 606 and 607 convert the imaged data from analog data to digital data with reference to clock signals output from the TG 605 respectively.

The image processing LSI 603 processes the image data A and B asynchronous and individually using the AD clocks used for A/D conversion respectively. Here, the details of the processing include an image import process, a gamma correction process, etc. Next, the image data processed independently of each other are transferred to the memory 614 through their corresponding DMAC channels respectively. Further, a pair of image data to be subjected to stereo processing are read from the memory 614 to the DMAC 615 using the fast clock 617. A stereo image process is performed using the same fast clock 617 as the DMAC 615. Thus, the flow of a series of operations is terminated.

In the configuration example shown in Fig. 1A illustrating the vehicle mounted stereo camera apparatus according to the first embodiment, a single clock generator is provided, and the timing generator TG 605 operated by a clock from the single clock generator supplies timing signals to the ADCs 606 and 607 and the imaging units 601 and 602.

Here, according to another configuration example of the first embodiment, which is not shown, two clock generators asynchronous with each other and independent of each other may be provided so that one of the clock generators supplies timing signals to the imaging units 601 and 602 while the other supplies timing signals to the ADCs 606 and 607. Also in this configuration example, in the same manner as in the aforementioned operation in the first embodiment, there is no fear that there occurs a pixel misalignment between image data A and B. According to a further configuration example of the first embodiment, three clock generators asynchronous with one another and independent of one another may be provided so that the first one of the clock generators supplies timing signals to the imaging units 601 and 602, and the second one supplies a timing signal to the ADC 606 while the third one supplies a timing signal to the ADC 607. Also in this configuration example, image data and an AD clock signal output from each ADC are synchronized with each other. Thus, there is no fear that there occurs a pixel misalignment between image data A and B.

As described above, according to this embodiment, the timing misalignment (horizontal pixel misalignment) which might occur when a plurality of pieces of data of taken images are propagated to the image processing LSI can be eliminated so that a high-reliability and high-accuracy stereo camera apparatus can be obtained. In addition, it is not necessary to make the cable lengths between the respective imaging units and the image processing LSI equal to each other. Accordingly, the system can be constructed with a minimum configuration, and the apparatus can be made small in size and low in price.

(Second Embodiment)

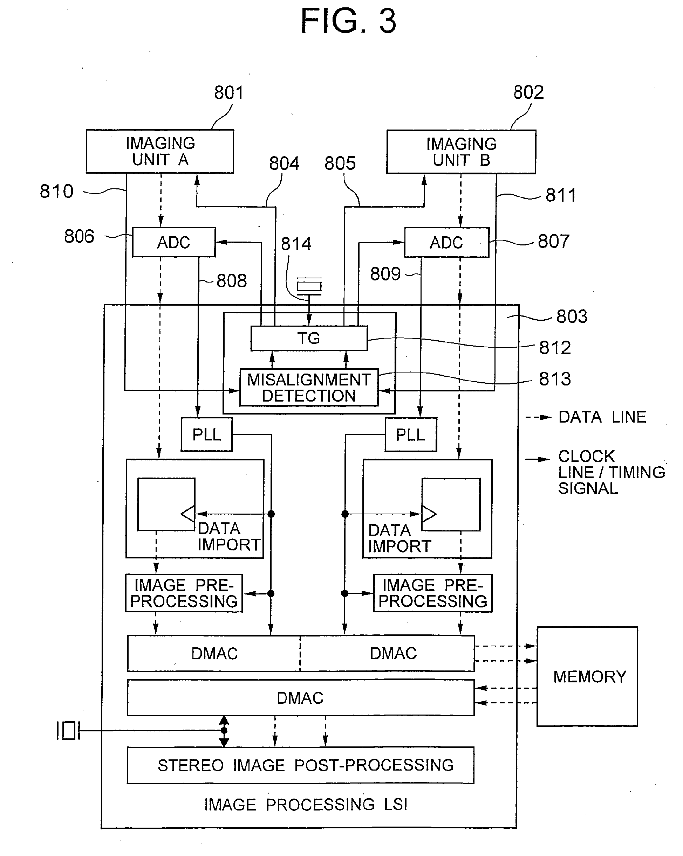

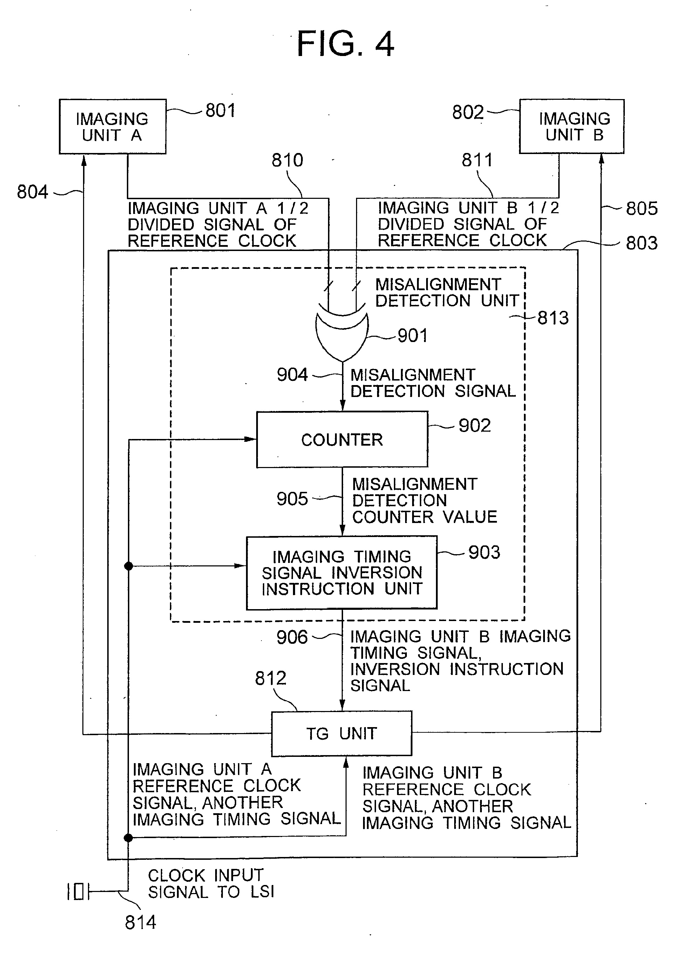

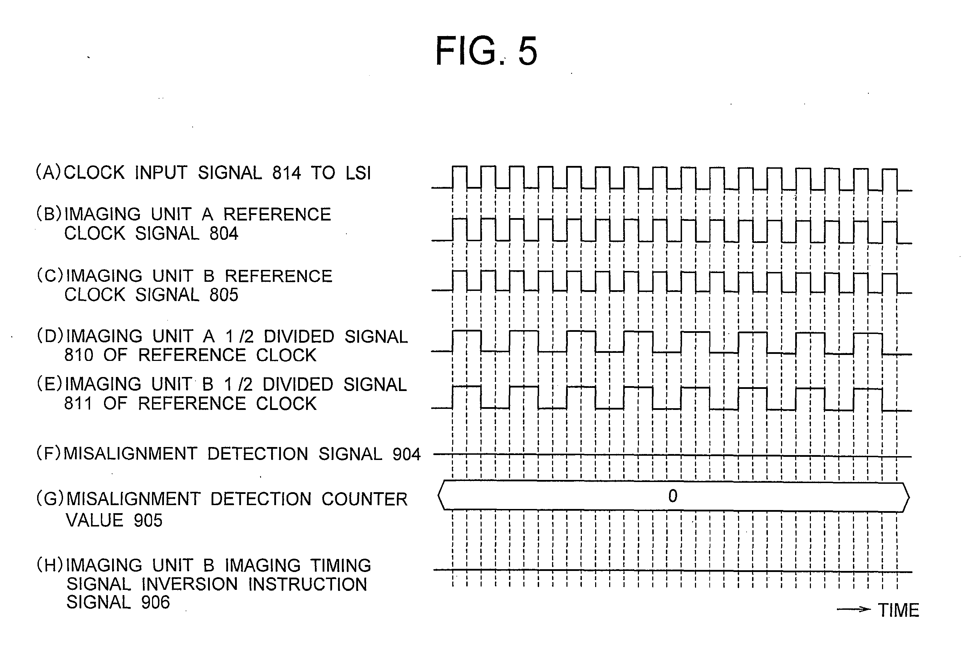

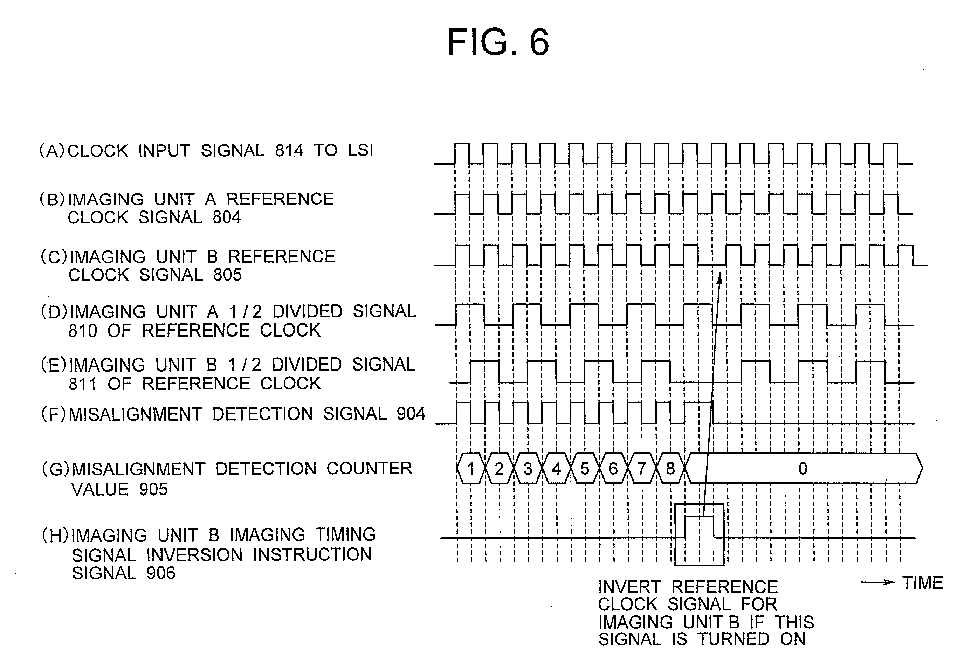

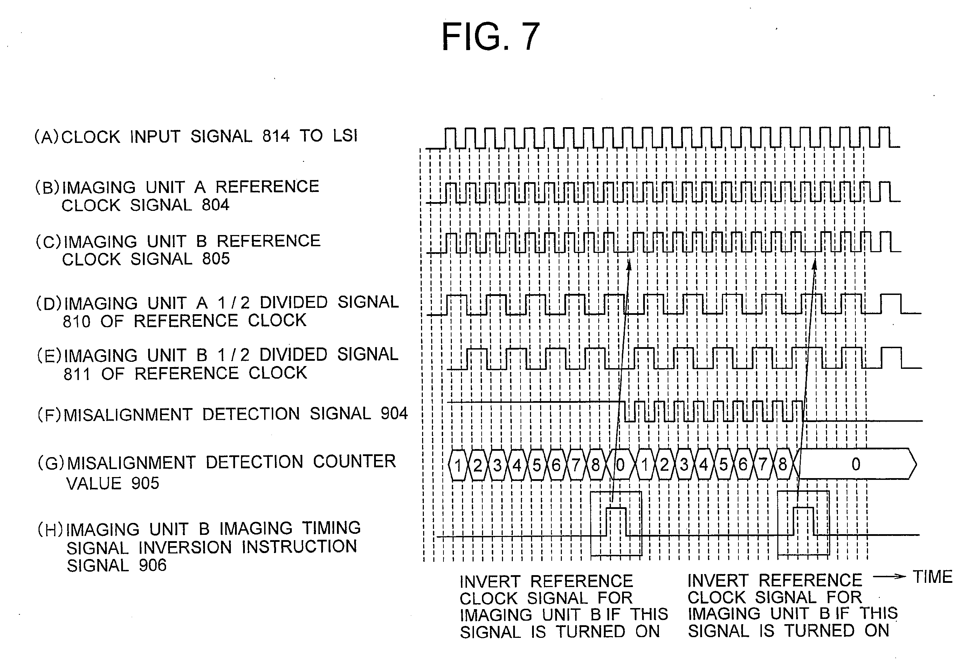

A vehicle mounted stereo camera apparatus according to a second embodiment of the present invention will be described below with reference to Figs. 3 to 7. Fig. 3 is a block diagram showing a configuration of the vehicle mounted stereo camera apparatus according to the second embodiment of the present invention. Fig. 4 is a diagram showing a specific configuration of an imaging timing misalignment detection mechanism in the vehicle mounted stereo camera apparatus according to the second embodiment. Fig. 5 is a chart showing operation timing at a normal time when there is no imaging timing misalignment in the imaging timing misalignment detection mechanism according to the second embodiment. Fig. 6 is a chart showing operation timing when imaging timing misalignment corresponding to half a clock period has been detected in the imaging timing misalignment detection mechanism according to the second embodiment. Fig. 7 is a chart showing operation timing when imaging timing misalignment corresponding to one clock period has been detected in the imaging timing misalignment detection mechanism according to the second embodiment.

In Fig. 3, a timing generator (TG) 812 for outputting imaging timing signals is provided in an image processing LSI 803. The timing generator 812 can generate independent imaging timing signals 804 and 805 for imaging units 801 and 802 respectively. Each imaging timing signal 804, 805 can set imaging timing individually in accordance with an instruction from an imaging timing misalignment detection mechanism 813. The imaging timing misalignment detection mechanism 813 adjusts the phases of the imaging timing signals 804 and 805 while monitoring imaging timing monitor signals 810 and 811 input from the imaging units A and B respectively.

In the imaging timing misalignment detection mechanism 813 shown in Fig. 4, a divided clock signal 810, 811 output from each imaging unit is used as a monitor signal for monitoring the imaging timing of the imaging unit. In Fig. 4, each imaging unit 801, 802 receiving the reference clock signal 804, 805 output from the image processing LSI 803 generates the clock signal 810, 811 having a period twice as long as that of the reference clock signal 804, 805, and supplies the generated clock signal 810, 811 to the image processing LSI 803. The misalignment detection mechanism 813 monitors the divided clock signals 810 and 811 of imaging timing. When the imaging timing output from one imaging unit is regarded as reference and the imaging timing output from the other imaging unit is shifted from the reference imaging timing, the misalignment detection mechanism 813 converts the phase of the imaging timing signal for the imaging unit which does not serve as reference. In Fig. 4, the divided clock signal 810 of the imaging unit A 801 is regarded as reference. When the phase of the divided clock signal 811 of the imaging unit B 802 is shifted from the reference, the reference clock signal 805 to be supplied to the imaging unit B 802 is inverted.

In this event, the misalignment is detected in the following method. That is, XOR 901 is obtained from the 1/2 divided clock signal 810 output from the imaging unit A 801 and the 1/2 divided clock signal 811 output from the imaging unit B 802. The XOR 901 is counted by a counter unit 902. When the counted number exceeds a predetermined counter threshold value for detecting misalignment, an imaging timing signal inversion instruction unit 903 turns on an instruction signal 906 to invert the imaging timing signal 805 to be supplied to the imaging unit B 802. When the instruction signal 906 is turned on, the timing generator (TG) 812 inverts the reference clock signal to be supplied to the imaging unit B 802, and the imaging timing signal 805 incidental thereto.

Figs. 5, 6 and 7 show timing charts when the aforementioned misalignment detection mechanism is operating. Fig. 5 shows operation timing of the misalignment detection mechanism when there is no misalignment. Fig. 6 shows operation timing when there is a misalignment corresponding to half a clock period. Fig. 7 shows operation timing when there is a misalignment corresponding to one clock period. In the examples of Figs. 5, 6 and 7, the threshold value of the counter is set at 8. Therefore, in Figs. 6 and 7, the inversion instruction signal 906 to invert the imaging timing signal for the imaging unit B is turned on as soon as the counter value reaches 8. When the inversion instruction signal 906 is turned on, the reference clock signal 805 supplied to the imaging unit B by the image processing LSI 803 is inverted. Due to this inversion, the misalignment between the divided signals 810 and 811 serving as imaging timing monitor signals is eliminated.

As shown in the timing charts of Figs. 6 and 7, the misalignment detection mechanism can perform timing correction with resolution of half a clock period in reference to the clock signal to the image processing LSI 803. In Fig. 7, misalignment corresponding to one clock period is corrected whenever misalignment corresponding to half a clock period is detected twice.

The resolution to detect the misalignment in imaging timing is doubled for the following reason. That is, in the misalignment detection mechanism shown in Fig. 4, the delay is doubled due to a round tip over the cable length when the imaging timing signal 804, 805 is output from the image processing LSI 803 to each imaging unit and over the cable length when the divided clock signal 810, 811 is output from each imaging unit 804, 805 to the image processing LSI 803. However, for the misalignment in imaging timing, it will go well if only the delay caused by the trip to the imaging unit is taken into consideration. Accordingly, the misalignment is half a misalignment in the round trip (imaging timing misalignment corresponding to 1/4 of a clock period when there is a misalignment corresponding to half a clock period or imaging timing misalignment corresponding to 1/2 of a clock period when there is a misalignment corresponding to a clock period). Although the double-period divided clock signals 810 and 811 are used as monitor signals for monitoring imaging timing in Fig. 4, triple-period or quadruple-period clock signals may be used instead.

Next, in an application example of the vehicle mounted stereo camera apparatus according to the second embodiment, a vehicle mounted stereo camera apparatus can be formed by applying an imaging timing misalignment detection mechanism as shown in Fig. 4 to the fundamental configuration shown in Fig. 1. According to this configuration, not only is it possible to eliminate the timing misalignment (horizontal pixel misalignment) which can occur when a plurality of data of taken images are propagated to the image processing LSI, but it is also possible to eliminate the imaging timing misalignment. Accordingly, a stereo matching process higher in reliability and higher in accuracy can be attained. Further, when the timing generator is built in the image processing LSI, it is also possible to make the system smaller in size and lower in price.

(Third Embodiment)

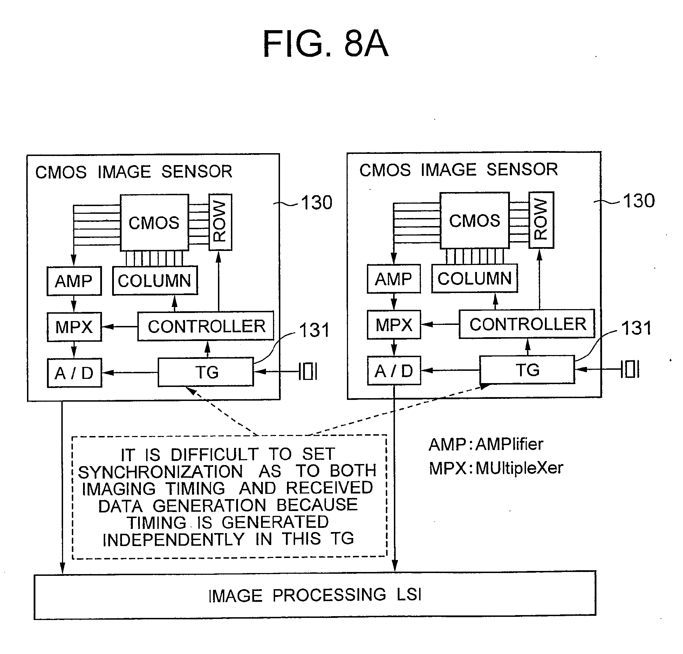

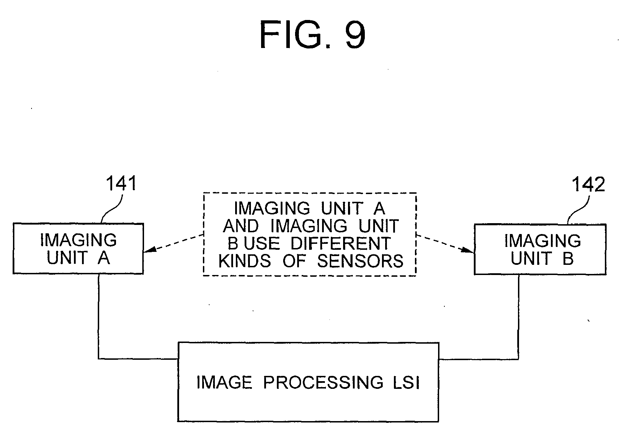

A vehicle mounted stereo camera apparatus according to a third embodiment of the present invention will be described below with reference to Figs. 8A-8B and 9. Figs. 8A-8B are block diagrams showing configurations of vehicle mounted stereo camera apparatus according to the third embodiment of the invention. Fig. 9 is a diagram showing a configuration example using different kinds of imaging units in a vehicle mounted stereo camera apparatus according to the third embodiment.

In vehicle mounted stereo camera apparatus according to the third embodiment, not CCD (Charge Coupled Device) sensors but CMOS (Complementary Metal-Oxide Semiconductor) sensors 130 are used in imaging units. As shown in the configuration example of Fig. 8A, each CMOS sensor 130 typically includes a timing generator TG 131 interiorly. In this TG built-in configuration, timing is generated by the TG 131 of each sensor 130 individually. It is therefore difficult to synchronize the sensors 130 with each other as to both the imaging timing and the received data generation.

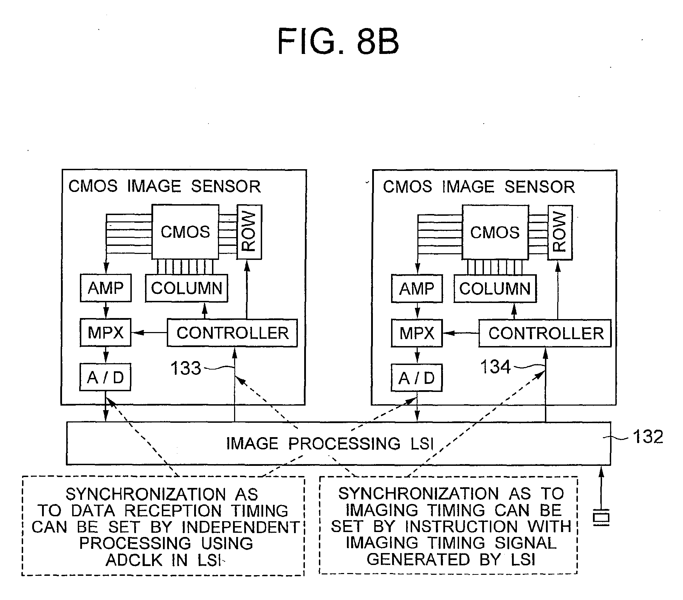

On the other hand, in the configuration example of Fig. 8B, timing signals 133 and 134 output from an image processing LSI 132 are used. In this configuration example, an instruction is given by imaging timing signals generated by the image processing LSI, so as to synchronize the imaging units with each other as to imaging timing. Further, synchronization as to data reception timing is attained by independent processing using ADCLK in the image processing LSI. Thus, a vehicle mounted stereo camera apparatus small in size and low in price can be provided by almost the same configuration as the configuration using CCD sensors.

In a system mode according to the third embodiment, images from the imaging units can be processed individually and independently. Accordingly, as shown in Fig. 9, a stereo image process using different kinds of imaging units 141 and 142 can be performed. For example, the imaging units can be constituted by CCD sensors equal in the number of pixels but different in sensitivity or cost or by a CCD sensor and a CMOS sensor. As a result, the cost can be reduced, or a system configuration opening to the way for new application development can be used flexibly.

(Fourth Embodiment)

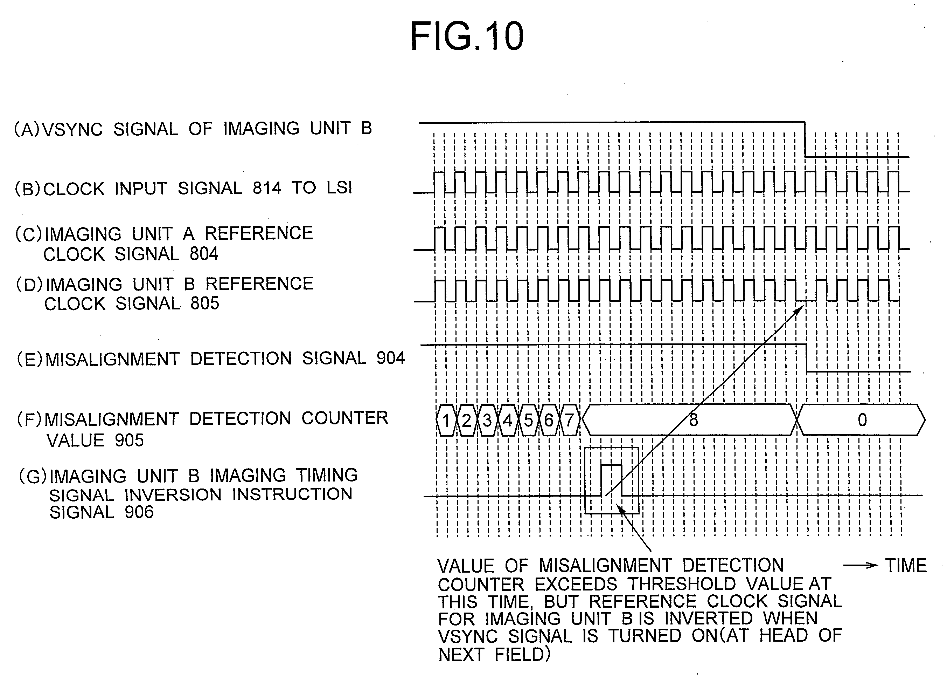

A vehicle mounted stereo camera apparatus according to a fourth embodiment of the present invention will be described below with reference to Fig. 10. Fig. 10 is a chart showing the configuration to change over an operation timing signal in the vehicle mounted stereo camera apparatus according to the fourth embodiment of the present invention.

In Figs. 6 and 7 which are timing charts showing the operation in the second embodiment, the image processing LSI 803 inverts the clock signal 805 for an imaging unit whose phase should be adjusted, immediately after the imaging timing signal 906 for phase adjustment is turned on (immediately after the misalignment is recognized).

On the other hand, in Fig. 10 showing the fourth embodiment, the phase of the timing signal 805 output from the image processing LSI 803 is changed over in sync with a Vsync signal (vertical sync signal) of the imaging unit B. In such a manner, the imaging timing signal 805 is changed over in sync with Vsync so that phase adjustment can be performed every field or every frame. Thus, imaging timing can be changed over smoothly. In addition, the time to change over the phase or frequency of timing signals output to a plurality of imaging units by the image processing LSI may be able to be set at desired timing individually for the respective imaging units.

As described above, according to the present invention, misalignment as to imaging timing among respective imaging units and misalignment as to timing for the respective imaging units to output image data to an image processing LSI can be adjusted. Thus, a stereo matching process high in accuracy can be attained in a high-reliability method. In addition, according to the present invention, a vehicle mounted stereo camera apparatus can be obtained without additional parts and in a form high in degree of freedom in board design. Accordingly, the present invention can contribute to making the vehicle mounted stereo camera apparatus lower in price and smaller in size.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. A vehicle mounted stereo camera apparatus comprising:

   a plurality of imaging units (601, 602) for generating image data sequentially based on optical information from an object; and
   an image processing unit (603) for importing said image data generated by said plurality of imaging units respectively, processing said imported image data individually, and then performing a stereo image process operation;

   wherein said image processing unit synchronizes said image data input into said image processing unit with clock signals for importing and processing said image data respectively, so as to perform said stereo image process operation while eliminating horizontal pixel misalignment from said image data from said plurality of imaging units.

2. A vehicle mounted stereo camera apparatus according to Claim 1, further comprising:

   a plurality of analog-to-digital conversion units (606, 607) provided between said plurality of imaging units (601, 602) and said image processing unit (603) respectively and for converting analog data from said plurality of imaging units into digital data respectively;

   wherein clock signals for analog-to-digital conversion used in said plurality of analog-to-digital conversion units (606, 607) respectively are used as clock signals (608, 609) for importing and processing image data from said plurality of imaging units (601, 602 respectively in said image processing unit (603).

3. A vehicle mounted stereo camera apparatus according to Claim 1 or 2, further comprising:

   a first clock signal generator for generating a clock signal for operating said plurality of imaging units; and
   a second clock signal generator for generating a clock signal for operating said plurality of analog-to-digital conversion units;

   wherein said first and second clock signal generators operates independently of each other.

4. A vehicle mounted stereo camera apparatus according to Claim 1 or 2, further comprising:

   a clock signal generator for generating clock signals for operating said plurality of imaging units and said plurality of analog-to-digital conversion units respectively.

5. A vehicle mounted stereo camera apparatus comprising:

   a plurality of imaging units (601, 602) for generating image data sequentially based on optical information from an object; and
   an image processing unit (603) for importing said image data generated by said plurality of imaging units respectively, processing said imported image data individually, and then performing a stereo image process operation;

   wherein said image processing unit (603)includes an imaging timing misalignment detection unit (813) for detecting misalignment as to imaging timing among said plurality of imaging units; and
   wherein said imaging timing misalignment detection unit detects misalignment as to imaging timing among said plurality of imaging units and outputs timing signals (804, 805) for eliminating said misalignment, respectively to said plurality of imaging units through a timing generator (812).

6. A vehicle mounted stereo camera apparatus according to Claim 5, wherein said image processing unit synchronizes a time of changing over phases of said timing signals output to said plurality of imaging units respectively, with a vertical sync signal.

7. A vehicle mounted stereo camera apparatus according to Claim 5 or 6, further comprising:

   a plurality of analog-to-digital conversion units (606, 607) provided between said plurality of imaging units (601, 602) and said image processing unit (603) respectively and for converting analog data from said plurality of imaging units into digital data respectively;

   wherein clock signals for analog-to-digital conversion used in said plurality of analog-to-digital conversion units (606, 607) respectively are used as clock signals (608, 609) for importing and processing image data from said plurality of imaging units (601, 602) respectively in said image processing unit (603).

8. A vehicle mounted stereo camera apparatus according to Claim 7, wherein said image processing unit synchronizes a time of changing over phases of said timing signals output to said plurality of imaging units respectively, with a vertical sync signal.

9. A vehicle mounted stereo camera apparatus comprising:

> a plurality of imaging units (601, 602) for generating image data sequentially based on optical information from an object;
> an image processing unit (603) for importing said image data generated by said plurality of imaging units respectively, processing said imported image data individually, and then performing a stereo image process operation; and
> analog-to-digital conversion units (606, 607) provided between said plurality of imaging units (601, 602) and said image processing unit (603) respectively and for converting analog data from said plurality of imaging units into digital data respectively;

wherein said plurality of imaging units has a configuration in which a CCD sensor and a CMOS sensor (130) are mixed;
wherein said image processing unit generates imaging timing signals and outputs said generated imaging timing signals to said plurality of imaging units respectively, so as to synchronize said plurality of imaging units with one another as to imaging timing; and
wherein clock signals for analog-to-digital conversion used in said analog-to-digital conversion units (606, 607) are used as clock signals (608, 609) for importing and processing image data from said plurality of imaging units (601, 602) in said image processing unit (603).

# FIG. 1A

# FIG. 1B

(A) CLOCK SIGNAL FOR
    PROCESSING IMAGE
    DATA A IN IMAGE
    PROCESSING LSI

(B) IMAGE DATA A TAKEN
    BY IMAGING UNIT A

(C) IMAGE DATA B TAKEN
    BY IMAGING UNIT B

(D) CLOCK SIGNAL FOR
    PROCESSING IMAGE
    DATA B IN IMAGE
    PROCESSING LSI

TIME

IMAGE DATA RECOGNIZED IN
IMAGE PROCESSING LSI

IMAGE DATA OF IMAGING UNIT A ::A→B→C→D→E

IMAGE DATA OF IMAGING UNIT B ::A→B→C→D→E

# FIG. 2

TG
> TG OUTPUTS IMAGING SIGNALS WITH SAME TIMING TO IMAGING UNITS RESPECTIVELY

IMAGING UNIT A
IMAGING UNIT B
> EACH IMAGING UNIT(IMAGING UNITS A, B IN DRAWINGS) PERFORMS EXPOSURE AND IMAGING

ADC
> ADC A / D-CONVERTS IMAGED DATA WITH REFERENCE TO CLOCK SIGNAL OUTPUT BY TG

IMAGE PROCESSING LSI
> IMAGE PROCESSING LSI CARRIES OUT PROCESSING (IMAGE IMPORT PROCESS, GAMMA CORRECTION PROCESS, ETC.) OF EACH IMAGE ASYNCHRONOUSLY AND INDEPENDENTLY USING AD CLOCK USED FOR A / D CONVERSION

> IMAGE PROCESSING LSI TRANSFERS IMAGE DATA PROCESSED INDEPENDENTLY, TO MEMORY THROUGH CORRESPONDING DMAC CHANNELS RESPECTIVELY

> IMAGE PROCESSING LSI READS(DMAC) A PAIR OF IMAGE DATA FOR STEREO PROCESSING, FROM MEMORY WITH FAST CLOCK

> IMAGE PROCESSING LSI PERFORMS STEREO IMAGE PROCESS USING THE SAME FAST CLOCK AS THAT FOR READING FROM MEMORY IN DMAC

# FIG. 3

# FIG. 4

IMAGING UNIT A ~801

802~ IMAGING UNIT B

810

811

804~

IMAGING UNIT A 1/2 DIVIDED SIGNAL OF REFERENCE CLOCK

IMAGING UNIT B 1/2 DIVIDED SIGNAL OF REFERENCE CLOCK

~805

~803

MISALIGNMENT DETECTION UNIT

~813

~901

904~ MISALIGNMENT DETECTION SIGNAL

COUNTER ~902

905~ MISALIGNMENT DETECTION COUNTER VALUE

IMAGING TIMING SIGNAL INVERSION INSTRUCTION UNIT ~903

906~ IMAGING UNIT B IMAGING TIMING SIGNAL, INVERSION INSTRUCTION SIGNAL

812

TG UNIT

IMAGING UNIT A REFERENCE CLOCK SIGNAL, ANOTHER IMAGING TIMING SIGNAL

IMAGING UNIT B REFERENCE CLOCK SIGNAL, ANOTHER IMAGING TIMING SIGNAL

CLOCK INPUT SIGNAL TO LSI

814

# FIG. 5

(A) CLOCK INPUT SIGNAL 814 TO LSI

(B) IMAGING UNIT A REFERENCE
CLOCK SIGNAL 804

(C) IMAGING UNIT B REFERENCE
CLOCK SIGNAL 805

(D) IMAGING UNIT A 1/2 DIVIDED SIGNAL
810 OF REFERENCE CLOCK

(E) IMAGING UNIT B 1/2 DIVIDED SIGNAL
811 OF REFERENCE CLOCK

(F) MISALIGNMENT DETECTION SIGNAL 904

(G) MISALIGNMENT DETECTION COUNTER
VALUE 905

(H) IMAGING UNIT B IMAGING TIMING
SIGNAL INVERSION INSTRUCTION
SIGNAL 906

0

⟶ TIME

EP 1 684 531 A2

# FIG. 6

(A) CLOCK INPUT SIGNAL 814 TO LSI

(B) IMAGING UNIT A REFERENCE
CLOCK SIGNAL 804

(C) IMAGING UNIT B REFERENCE
CLOCK SIGNAL 805

(D) IMAGING UNIT A 1/2 DIVIDED SIGNAL
810 OF REFERENCE CLOCK

(E) IMAGING UNIT B 1/2 DIVIDED SIGNAL
811 OF REFERENCE CLOCK

(F) MISALIGNMENT DETECTION SIGNAL 904

(G) MISALIGNMENT DETECTION COUNTER
VALUE 905

(H) IMAGING UNIT B IMAGING TIMING
SIGNAL INVERSION INSTRUCTION
SIGNAL 906

(G) counter values: 1 2 3 4 5 6 7 8 0

INVERT REFERENCE
CLOCK SIGNAL FOR
IMAGING UNIT B IF THIS
SIGNAL IS TURNED ON

⟶ TIME

EP 1 684 531 A2

# FIG. 7

(A) CLOCK INPUT SIGNAL 814 TO LSI

(B) IMAGING UNIT A REFERENCE CLOCK SIGNAL 804

(C) IMAGING UNIT B REFERENCE CLOCK SIGNAL 805

(D) IMAGING UNIT A 1/2 DIVIDED SIGNAL 810 OF REFERENCE CLOCK

(E) IMAGING UNIT B 1/2 DIVIDED SIGNAL 811 OF REFERENCE CLOCK

(F) MISALIGNMENT DETECTION SIGNAL 904

(G) MISALIGNMENT DETECTION COUNTER VALUE 905

(H) IMAGING UNIT B IMAGING TIMING SIGNAL INVERSION INSTRUCTION SIGNAL 906

1 2 3 4 5 6 7 8 0 1 2 3 4 5 6 7 8 0

INVERT REFERENCE CLOCK SIGNAL FOR IMAGING UNIT B IF THIS SIGNAL IS TURNED ON

INVERT REFERENCE CLOCK SIGNAL FOR IMAGING UNIT B IF THIS SIGNAL IS TURNED ON

⟶ TIME

EP 1 684 531 A2

# FIG. 8A

CMOS IMAGE SENSOR ~130

CMOS
ROW
AMP COLUMN
MPX CONTROLLER ~131
A / D TG

CMOS IMAGE SENSOR ~130

CMOS
ROW
AMP COLUMN
MPX CONTROLLER ~131
A / D TG

IT IS DIFFICULT TO SET SYNCHRONIZATION AS TO BOTH IMAGING TIMING AND RECEIVED DATA GENERATION BECAUSE TIMING IS GENERATED INDEPENDENTLY IN THIS TG

AMP : AMPlifier
MPX : MUltipleXer

IMAGE PROCESSING LSI

# FIG. 8B

CMOS IMAGE SENSOR

CMOS

ROW

AMP | COLUMN

MPX ← CONTROLLER

A / D

133

CMOS IMAGE SENSOR

CMOS

ROW

AMP | COLUMN

MPX ← CONTROLLER

A / D

134

IMAGE PROCESSING LSI

132

SYNCHRONIZATION AS TO DATA RECEPTION TIMING CAN BE SET BY INDEPENDENT PROCESSING USING ADCLK IN LSI·

SYNCHRONIZATION AS TO IMAGING TIMING CAN BE SET BY INSTRUCTION WITH IMAGING TIMING SIGNAL GENERATED BY LSI

# FIG. 9

141

IMAGING
UNIT A

IMAGING UNIT A
AND IMAGING UNIT
B USE DIFFERENT
KINDS OF SENSORS

142

IMAGING
UNIT B

IMAGE PROCESSING LSI

# FIG.10

(A) VSYNC SIGNAL OF IMAGING UNIT B

(B) CLOCK INPUT SIGNAL 814 TO LSI

(C) IMAGING UNIT A REFERENCE
CLOCK SIGNAL 804

(D) IMAGING UNIT B REFERENCE
CLOCK SIGNAL 805

(E) MISALIGNMENT DETECTION SIGNAL 904

(F) MISALIGNMENT DETECTION COUNTER
VALUE 905

(G) IMAGING UNIT B IMAGING TIMING
SIGNAL INVERSION INSTRUCTION
SIGNAL 906

VALUE OF MISALIGNMENT DETECTION
COUNTER EXCEEDS THRESHOLD VALUE AT
THIS TIME, BUT REFERENCE CLOCK SIGNAL
FOR IMAGING UNIT B IS INVERTED WHEN
VSYNC SIGNAL IS TURNED ON(AT HEAD OF
NEXT FIELD)

→ TIME

EP 1 684 531 A2

# FIG.11

MEASURING POINT

LENS

IMAGING PLANE

z

f

δ

b

# FIG.12

| IMAGING UNIT A | IMAGING UNIT B |
|---|---|

IMAGE DATA A TAKEN
BY IMAGING UNIT A

IMAGE DATA B TAKEN
BY IMAGING UNIT B

| IMAGE PROCESSING LSI |
|---|

PIXEL MISALIGNMENT EXAMPLE 1: THE CASE WHERE
IMAGE DATA B TAKEN BY IMAGING UNIT B IS DELAYED

IMAGE PROCESSING CLOCK
SIGNAL IN IMAGE PROCESSING LSI

IMAGE DATA A TAKEN BY
IMAGING UNIT A

IMAGE DATA B TAKEN BY
IMAGING UNIT B

IMAGE DATA RECOGNIZED IN
IMAGE PROCESSING LSI

IMAGE DATA OF IMAGING UNIT A ::A→B→C→D
IMAGE DATA OF IMAGING UNIT B ::Z→A→B→C

PIXEL MISALIGNMENT EXAMPLE 2: THE CASE WHERE
IRREGULAR TIMING MISALIGNMENT HAS OCCURRED
IN IMAGE DATA A TAKEN BY IMAGING UNIT A

IMAGE PROCESSING CLOCK
SIGNAL IN IMAGE PROCESSING LSI

IMAGE DATA A TAKEN BY
IMAGING UNIT A

IMAGE DATA B TAKEN BY
IMAGING UNIT B

IMAGE DATA RECOGNIZED IN
IMAGE PROCESSING LSI

IMAGE DATA OF IMAGING UNIT A ::A→B→C→C→D→E
IMAGE DATA OF IMAGING UNIT B ::Z→A→B→C→D→E

# FIG.13

EQUAL-LENGTH WIRING BETWEEN WIRE LENGTH FROM TG
AND IMAGE PROCESSING LSI TO IMAGING UNIT A AND WIRE
LENGTH FROM TG AND IMAGE PROCESSING LSI TO IMAGING UNIT B

# FIG.14
## PRIOR ART

FIG.14 PRIOR ART

407 EXTERNAL TRIGGER SIGNAL GENERATING UNIT

401 FIRST IMAGING UNIT

404 FIRST CONTROL UNIT

409 FIRST MEMORY

412 IMAGE PROCESSING UNIT

402 SECOND IMAGING UNIT

405 SECOND CONTROL UNIT

410 SECOND MEMORY

403 THIRD IMAGING UNIT

406 THIRD CONTROL UNIT

411 THIRD MEMORY

408 CLOCK SIGNAL GENERATING UNIT

EP 1 684 531 A2